# FASCICULE DE BREVET EUROPEEN

(11) **EP 3 227 761 B1**
(45) Date de publication et mention de la délivrance du brevet: **27.11.2019**
(21) Numéro de dépôt: 15802090.9
(22) Date de dépôt: 30.11.2015
(51) Int. Cl.: G06F 3/01, F16F 9/53, H03K 17/97

(54) **INTERFACE HAPTIQUE A RENDU HAPTIQUE AMELIORE, NOTAMMENT DANS LA REPRODUCTION D'UNE BUTEE**
HAPTISCHE SCHNITTSTELLE MIT VERBESSERTER HAPTISCHER RÜCKMELDUNG, INSBESONDERE BEI DER WIEDERGABE EINES STOPPS
HAPTIC INTERFACE PROVIDING IMPROVED HAPTIC FEEDBACK, ESPECIALLY IN THE REPRODUCTION OF A STOP

(30) Priorité: 02.12.2014 FR 1461796
(43) Date de publication de la demande: 11.10.2017
(73) Titulaire: Commissariat à l'Énergie Atomique et aux Énergies Alternatives, 75015 Paris (FR)
(72) Inventeur: ECK, Laurent, 28410 Saint Lubin de la Haye (FR); HAFEZ, Moustapha, 94110 Arcueil (FR)
(74) Mandataire: Brevalex
(86) Numéro de dépôt international: PCT/EP2015/078088
(87) Numéro de publication internationale: WO 2016/087383

(56) Documents cités:
- FR-A1- 2 930 655
- US-A1- 2002 057 152

## Description

### DOMAINE TECHNIQUE ET ÉTAT DE LA TECHNIQUE ANTÉRIEURE

Le présent document se rapporte à une interface haptique à rendu haptique amélioré, notamment dans la reproduction d'une butée.

Une interface haptique peut prendre la forme d'un bouton rotatif manipulé par un utilisateur, un capteur de position angulaire détermine la position angulaire du bouton. Dans ce cas l'interface oppose un couple résistant à l'utilisateur en fonction de la position angulaire du bouton et du déplacement appliqué par l'utilisateur, permettant ainsi de définir des motifs haptiques qui seront ressentis par l'utilisateur lorsqu'il tourne le bouton.

Le couple résistant peut être transmis au bouton par l'intermédiaire d'un fluide magnéto-rhéologique dont la viscosité apparente est modifiée par l'application d'un champ magnétique afin de définir les motifs haptiques prédéfinis. Dans cette configuration où le ressenti haptique est une fonction angulaire de la position du bouton, la production de certains motifs haptiques est entachée d'effets indésirables qui nuisent à la qualité haptique perçue.

Par exemple dans le cas où le capteur de position détecte que le bouton entre dans une zone angulaire définie comme butée haptique, l'interface doit reproduire cette butée. Il est alors nécessaire de générer un couple résistant important lorsque le bouton rentre dans la zone angulaire définie comme butée haptique. Or il se peut que l'utilisateur force sur le bouton, i.e. qu'il continue à exercer un couple sur le bouton, la position angulaire du bouton va alors se modifier en conséquence jusqu'à ce qu'elle sorte de la zone angulaire définie comme une butée. Il en résulte un franchissement de la butée virtuelle. Ce franchissement peut aussi survenir par effet d'inertie si la zone définie comme butée est trop étroite. Or si la position angulaire du bouton est modifiée de sorte à sortir de la zone angulaire définie comme butée, le capteur de position angulaire va mesurer une position angulaire en dehors de la zone définie comme butée, l'interface va alors modifier le couple résistant appliqué qui ne sera plus nécessairement celui d'une butée. Il en résulte donc un risque que le couple correspondant au motif "butée" ne soit plus appliqué au bouton et donc un mauvais rendu haptique.

Les documents US2002/057152 et FR2930655 décrivent des interfaces haptiques comportant un bouton rotatif et un frein utilisant un fluide magnétorhéologique. La position du bouton est mesurée au moyen d'un capteur de position.

### EXPOSÉ

L'invention est définie par les revendications indépendantes, des aspects supplémentaires de l'invention sont décrits dans les revendications dépendantes. Les modes de réalisation qui ne font pas partie de l'étendue de ces revendications ne décrivent pas l'invention. C'est par conséquent un but de la présente invention d'offrir une interface haptique offrant un rendu haptique amélioré, notamment dans le cas de la reproduction d'une butée.

Le but précédemment énoncé est atteint par une interface haptique comportant un organe d'interaction avec l'utilisateur et un organe d'interaction avec un fluide dont la viscosité varie en fonction d'un stimulus de contrôle, les deux organes étant solidaires au moins en rotation ou au moins en translation, l'organe d'interaction avec l'utilisateur étant apte à être déplacé dans un premier sens et dans un deuxième sens, des moyens pour générer un stimulus variable, un capteur de position de l'élément d'interaction avec l'utilisateur, des moyens pour détecter le sens de déplacement de l'élément d'interaction avec l'utilisateur et/ou le sens dans lequel l'utilisateur a l'intention de déplacer l'élément d'interaction avec l'utilisateur, et une unité de commande qui élabore une représentation interne de la position courante du bouton à partir des informations du capteur de position et qui, au moins lorsqu'une position courante élaborée correspond à une zone de butée et lorsque le sens de déplacement est celui associé à la zone de butée, génère un ordre d'appliquer un effort résistant à l'organe d'interaction avec le fluide qui correspond à une butée. L'unité de commande conserve cette valeur de position courante pour la commande des moyens générant le stimulus tant que le sens de déplacement de l'organe d'interaction avec l'utilisateur reste le sens de déplacement associé à la zone de butée, et élabore à nouveau une valeur de position courante à partir des informations du capteur de position pour la commande des moyens générant le stimulus, lorsque le sens de déplacement de l'organe d'interaction avec l'utilisateur est le sens opposé à celui associé à la zone de butée.

En d'autres termes, à partir du signal fourni par le capteur de position du bouton, on élabore une variable qui va correspondre à la position courante du bouton considérée par l'unité de commande et on crée une butée infranchissable en altérant cette valeur de la position courante dès que la valeur de position courante correspond à une zone de butée et le déplacement du bouton est dans un sens correspondant à la butée. L'interface considère alors comme signal pour commander les moyens pour générer un effort résistant une valeur de position courante altérée correspondant à une zone de butée et ceci tant que le sens de déplacement de l'organe d'interaction avec l'utilisateur n'est pas modifié, et ceci même si le capteur de position détecte un déplacement du bouton. L'unité de commande utilise les signaux fournis par le capteur de position pour connaître la position relative du bouton et non sa position réelle.

En effet, lorsque l'organe d'interaction avec l'utilisateur arrive dans une zone définie comme une butée haptique dans un sens donné, pour que la sensation haptique soit fiable l'utilisateur ressent une butée tant qu'il ne déplace pas en sens opposé l'élément d'interaction avec l'utilisateur. Ainsi il n'y a aucun risque que l'interface soit trompée par un franchissement forcé ou malencontreux de la zone définie comme butée.

Ainsi grâce à l'invention, l'élément d'interaction avec l'utilisateur peut franchir mécaniquement la zone de butée mais l'interface ne voit pas que l'élément d'interaction avec l'utilisateur est sorti de la zone de butée puisque la position courante de l'élément d'interaction avec l'utilisateur est fixée à une valeur qui est dans la zone de butée, l'effort de freinage qui est alors appliqué est celui correspondant à une zone de butée. Lorsque le bouton est déplacé dans le sens inverse, l'unité de commande considère qu'il est sorti de la zone de butée.

Dans un exemple particulier, le fluide mis en œuvre est un fluide magnéto-rhéologique et les moyens générant un stimulus sont des moyens générant un champ magnétique variable.

Le présent document a alors pour objet un procédé de génération de sensations haptiques à partir d'une interface haptique comportant:
- un élément d'interaction avec un utilisateur apte à se déplacer dans un premier sens et dans un deuxième sens,
- un élément d'interaction avec un fluide dont la viscosité varie en fonction d'un stimulus extérieur, l'élément d'interaction avec le fluide étant solidaire au moins en translation ou au moins en rotation de l'élément d'interaction avec l'utilisateur,
- un frein comportant un fluide dont la viscosité apparente varie en fonction d'un stimulus extérieur et un système de génération dudit stimulus sur commande dans ledit fluide, l'élément d'interaction avec le fluide étant disposé dans le fluide,
- des moyens de détermination d'une position de l'élément d'interaction avec l'utilisateur,
- des moyens de détermination du déplacement de l'élément d'interaction avec l'utilisateur ou de l'intention dans laquelle l'utilisateur à l'intention de déplacer l'élément d'interaction avec l'utilisateur,
- une unité de commande apte à envoyer des ordres audit système de génération dudit stimulus,

Ledit procédé comportant les étapes:
a) de mesure de la position de l'élément d'interaction avec l'utilisateur,
b) de détermination du sens de rotation de l'élément d'interaction avec l'utilisateur ou du sens dans lequel l'utilisateur a l'intention de déplacer l'élément d'interaction avec l'utilisateur,
c) d'évaluation d'une information de position courante à partir de la mesure de position de l'élément d'interaction avec l'utilisateur,
d) si l'information de position courante est dans une zone définie comme butée haptique et le sens de rotation de l'élément d'interaction avec l'utilisateur ou le sens dans lequel l'utilisateur a l'intention de déplacer l'élément d'interaction avec l'utilisateur est celui associé à la butée haptique, l'information de position courante considérée pour commander le système de génération du stimulus est fixée à une valeur de position courante correspondant à une zone définie comme butée haptique tant que le sens de déplacement de l'élément d'interaction avec l'utilisateur ou le sens dans lequel l'utilisateur a l'intention de déplacer l'élément d'interaction avec l'utilisateur n'est pas modifié,
e) si l'information de position courante est dans une zone autre qu'une zone définie comme butée haptique, la position courante considérée pour commander le système de génération dudit stimulus est évaluée à partir de la mesure de position de l'élément d'interaction avec l'utilisateur,
f) de génération d'un ordre au système de génération dudit stimulus sur la base de la position courante,
g) de modification de la viscosité du fluide.

Par exemple, si la position courante est dans une zone définie comme butée haptique et le sens de rotation de l'élément d'interaction avec l'utilisateur ou le sens dans lequel l'utilisateur a l'intention de déplacer l'élément d'interaction avec l'utilisateur est celui associé à la butée haptique, la valeur de l'information de position courante considérée est évaluée à partir de la position mesurée dès que l'élément d'interaction avec l'utilisateur entre dans une zone définie comme une zone de butée.

Par exemple, la détermination du sens de rotation comporte le calcul de la dérivée de la mesure de l'étape a).

Dans un exemple de réalisation, la détermination du sens dans lequel l'utilisateur a l'intention de déplacer l'élément d'interaction avec l'utilisateur peut comporter l'étape de détection du couple exercé par un utilisateur sur l'élément d'interaction avec l'utilisateur dans le cas d'un élément d'interaction avec l'utilisateur mobile en rotation.

Dans un autre exemple de réalisation, la détermination du sens dans lequel l'utilisateur a l'intention de déplacer l'élément d'interaction avec l'utilisateur comporte l'étape de détection de l'effort exercé par un utilisateur sur l'élément d'interaction avec l'utilisateur, dans le cas d'un élément d'interaction avec l'utilisateur mobile en translation.

Lorsque le fluide mis en œuvre est un fluide magnéto-rhéologique l'étape f) comporte l'application d'un champ magnétique.

La présente invention a également pour objet une interface haptique comportant :
- un élément d'interaction avec un utilisateur apte à se déplacer dans un premier sens et dans un deuxième sens,
- un élément d'interaction avec un fluide dont la viscosité varie en fonction d'un stimulus extérieur, l'élément d'interaction avec le fluide étant solidaire au moins en translation ou au moins en rotation de l'élément d'interaction avec l'utilisateur,
- un frein comportant un fluide dont la viscosité apparente varie en fonction d'un stimulus extérieur et un système de génération dudit stimulus sur commande dans ledit fluide, l'élément d'interaction avec le fluide étant disposé dans le fluide,
- des moyens de détermination d'une position de l'élément d'interaction avec l'utilisateur,
- des moyens de détermination du sens de déplacement de l'élément d'interaction avec l'utilisateur et/ou des moyens de détermination du sens de déplacement dans lequel l'utilisateur à l'intention de déplacer l'élément d'interaction avec l'utilisateur,
- une unité de commande apte à envoyer des ordres audit système de génération dudit stimulus, l'unité de commande comportant des moyens pour générer lesdits ordres en fonction de la position de l'élément d'interaction avec l'utilisateur et du sens de déplacement de l'élément d'interaction avec l'utilisateur et/ou du sens dans lequel l'utilisateur a l'intention de déplacer l'élément d'interaction avec l'utilisateur à partir de motifs haptiques prédéfinis, les motifs haptiques comportant au moins une butée haptique définie pour une zone de déplacement donnée et pour un sens de déplacement donné, l'unité de commande étant telle qu'elle évalue une information de position courante à partir de la mesure de position de l'élément d'interaction et que, si la position courante se situe dans une zone définie comme une butée haptique et que le sens de déplacement de l'élément d'interaction avec l'utilisateur est celui associé à la butée haptique , l'unité de commande fixe l'information de position courante à une valeur de position courante correspondant à une zone définie comme butée haptique, désignée position courante modifiée, tant que le sens de déplacement de l'élément d'interaction avec l'utilisateur n'est pas modifié et génère des ordres au système de génération du stimulus sur la base de cette position courante modifiée.

La valeur de position courant fixée correspond par exemple à la zone d'entrée de la zone définie comme butée haptique.

Les moyens de détermination du déplacement de l'élément d'interaction avec l'utilisateur peuvent comporter des moyens pour calculer la dérivée des mesures fournies par les moyens de détermination d'une position de l'élément d'interaction avec l'utilisateur.

Dans un exemple de réalisation, les moyens de détermination de l'intention de déplacer l'élément d'interaction avec l'utilisateur comporte des moyens pour détecter le couple exercé par un utilisateur sur l'élément d'interaction avec l'utilisateur, dans le cas d'un élément d'interaction avec l'utilisateur mobile en rotation, ou des moyens pour détecter l'effort exercé par un utilisateur sur l'élément d'interaction avec l'utilisateur, dans le cas d'un élément d'interaction avec l'utilisateur mobile en translation.

Le fluide est avantageusement un fluide magnéto-rhéologique, le stimulus étant un champ magnétique et les ordres générés étant des intensités de courant.

Dans un exemple, l'élément d'interaction avec l'utilisateur est mobile en rotation et est solidaire d'un arbre de rotation d'axe longitudinal duquel est solidaire en rotation l'élément d'interaction avec le fluide, les moyens de mesure de la position angulaire étant un capteur de position angulaire.

Dans un autre exemple, l'élément d'interaction avec l'utilisateur est mobile en translation.

### BRÈVE DESCRIPTION DES DESSINS

La présente invention sera mieux comprise sur la base de la description qui va suivre et des dessins en annexe sur lesquels:
- la figure 1 est une vue en coupe d'un exemple de réalisation d'un dispositif d'interface haptique rotative pouvant être mise en œuvre dans la présente invention,
- la figure 2 est une représentation schématique d'une interface rotative mettant en œuvre la présente invention,
- la figure 3 est une représentation schématique d'un exemple de réalisation d'un dispositif d'interface haptique linéaire pouvant être mise en œuvre dans la présente invention,
- la figure 4 est une vue en coupe transversale le long du plan A-A de l'interface de la figure 1,
- la figure 5 est une vue en perspective d'un exemple de réalisation d'un corps d'épreuve mis en œuvre dans l'interface de la figure 1,
- la figure 6 est une vue en perspective d'un autre exemple de réalisation d'un corps d'épreuve pouvant être mis en œuvre dans l'interface de la figure 1,
- la figure 7 est une vue de côté d'un autre exemple d'interface haptique,
- les figures 8A à 8C sont différentes vues du corps d'épreuve mis en œuvre dans l'interface de la figure 7.

### EXPOSÉ DÉTAILLÉ DE MODES DE RÉALISATION PARTICULIERS

Dans la description qui va suivre, l'exemple d'une interface haptique à bouton rotatif va être décrit en détail, mais il sera compris que l'invention s'applique également à une interface haptique à déplacement linéaire de type curseur. En outre, l'interface décrite met en œuvre un fluide magnéto-rhéologique, i.e. dont la viscosité apparente varie en fonction du champ magnétique appliqué, mais la mise en œuvre d'un fluide électro-rhéologique, i.e. un fluide dont la viscosité apparente dépend du champ électrique appliqué, ne sort pas du cadre de la présente invention.

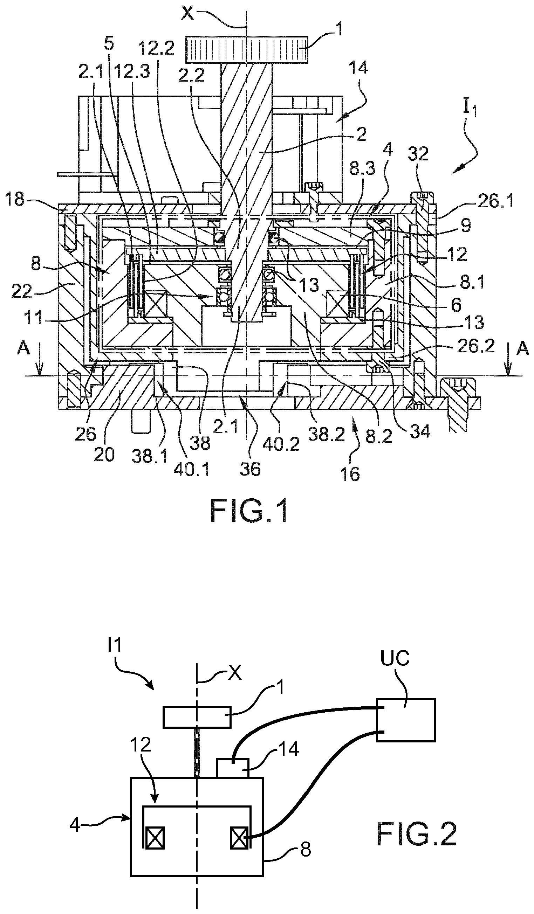

Sur la figure 1, on peut voir une vue en coupe longitudinale d'un exemple de réalisation d'un dispositif D pour interface haptique rotative IH selon l'invention.

Le dispositif D comporte un élément 1 destiné à être manipulé par un utilisateur et qui sera désigné par la suite « bouton », ce bouton est solidaire en rotation d'un arbre 2 mobile en rotation autour de l'axe X, et un dispositif de génération d'effort résistant 4 ou frein magnéto-rhéologique s'opposant à la rotation de l'arbre 2.

Le frein 4 comporte un fluide dont on peut modifier les caractéristiques au moyen d'un champ magnétique et un système de génération d'un champ magnétique 6 reçus dans un boîtier 8. Le fluide est, par exemple un liquide magnéto-rhéologique. L'ensemble comprenant le boîtier, le fluide et le système de génération d'un champ magnétique forme un frein magnéto-rhéologique.

Le boîtier 8 délimite une chambre étanche 9 contenant le fluide magnéto-rhéologique. Tout ou partie de cette chambre étant soumise à un champ magnétique généré par le système 6. Le boîtier 8 comporte une paroi latérale 8.1, un fond inférieur 8.2 et un fond supérieur 8.3.

L'arbre 2 traverse le fond supérieur 8.3, traverse la chambre 9 et traverse le fond inférieur 8.2. L'extrémité 2.1 de l'arbre 2, opposée à celle portant le bouton 1, est logée dans le fond inférieur du boîtier 8 et est guidée en rotation au moyen d'un roulement 11 monté dans le fond inférieur 8.2. Des joints 13, par exemple des joints toriques, assurent l'étanchéité entre l'arbre et les fonds inférieur et supérieur.

Le boîtier 8 délimite une chambre étanche confinant le fluide magnétorhéologique.

Le frein 4 comporte également un élément 12 solidaire en rotation de l'arbre 2 et logé dans la chambre étanche 10. Cet élément est apte à interagir avec le fluide magnéto-rhéologique, la rotation de l'élément 12 étant plus au moins freinée par le fluide magnéto-rhéologique en fonction de sa viscosité apparente.

Dans l'exemple représenté, l'élément 12 comporte deux parois latérales concentriques 12.1, 12.2 de section transversale circulaire solidaire d'un fond 12.3, lui-même solidarisé en rotation avec l'arbre.

En variante, l'élément 12 peut ne comporter qu'une paroi latérale ou plus de deux parois latérales concentriques. En variante encore, l'élément 12 pourrait être formé par un disque. Par ailleurs, l'élément d'interaction pourrait comporter des lumières et/ou des portions en saillie ou en creux afin d'augmenter la résistance au déplacement.

Dans l'exemple représenté, le fond inférieur 8.2 du boîtier 8 a une forme telle que le volume intérieur de la chambre étanche 9 a une forme qui correspond à celle de l'élément d'interaction 12, ce qui permet de réduire la quantité de fluide nécessaire. Dans l'exemple représenté, un élément cylindrique 13 à section circulaire solidaire du boîtier est interposé entre les deux parois latérales 12.1, 12.2, celui-ci contribue à l'effet de cisaillement du fluide magnéto-rhéologique lorsque les parois latérales 12.1 et 12.2 sont mises en rotation.

Les parois latérales 12.1, 12.2 de l'élément 12 peuvent être en matériau magnétique ou amagnétique.

Dans l'exemple représenté, le système de génération d'un champ magnétique variable 6 comporte une bobine fixée sur le boîtier et disposée à l'intérieur de l'élément d'interaction 12, et une alimentation en courant (non représentée) commandée par une unité de commande en fonction de la manipulation du bouton et des motifs préenregistrés.

L'interface haptique, représentée de manière schématique sur la figure 2, comporte le dispositif D, un capteur 14 de position de l'élément d'interaction avec l'utilisateur, qui est, dans l'exemple représenté, situé à l'extérieur du boîtier et en partie solidaire de l'arbre 2 et logé dans une cavité formée dans le fond inférieur 8.2 du boîtier. Le capteur de position 14 permet à l'unité de commande de calculer la position courante du bouton, qui est dans l'exemple représenté la position angulaire courante. Le capteur de position 14 peut être un capteur de position relative tel qu'un codeur optique incrémental ou un capteur de position absolu, mais nous verrons par la suite que la connaissance de la position absolue du bouton n'intervient pas dans les algorithmes. Dans l'exemple représenté, le dispositif comporte également un bâti 16 dans lequel est disposé le boîtier 8. Le bâti 16 comporte un premier et un deuxième flasque d'extrémité 18, 20 et une paroi latérale 22 fixée aux deux flasques 18, 20, le premier flasque 18 est traversé par l'arbre rotatif. Le capteur de position 14 est fixé sur le premier flasque du bâti.

L'interface comporte également une unité de commande UC destinée à générer des ordres audit système de génération de champ magnétique sur la base des informations fournies par le capteur de position de sorte qu'il applique les valeurs du motif à reproduire.

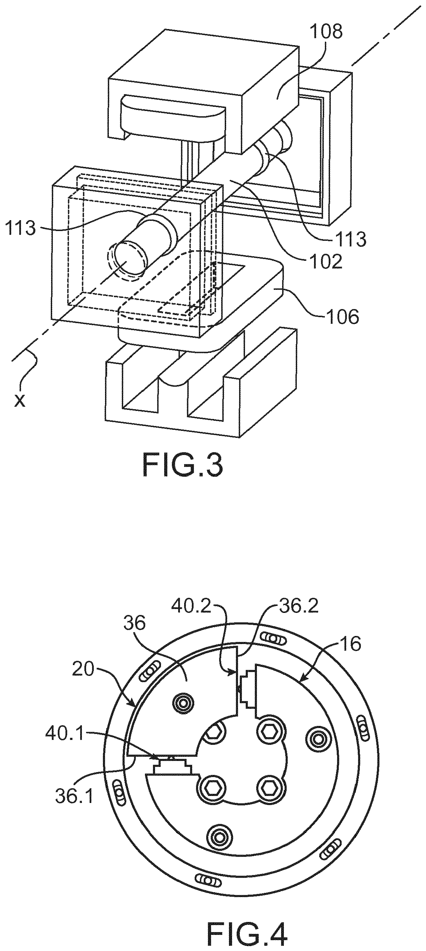

Sur la figure 3, on peut voir une vue en éclaté d'un exemple représenté schématiquement d'un dispositif apte à être mis en œuvre dans une interface linéaire selon l'invention.

Le dispositif comporte un boîtier 108 dans lequel est monté un axe 102 mobile axialement le long de son axe X, l'axe 102 étant destiné à porter un élément d'interaction avec l'utilisateur (non représenté) au niveau d'au moins l'une de ses extrémités longitudinales, des moyens de génération d'un champ magnétique variable 106 est disposé dans le boîtier. Le boiter délimite une chambre étanche qui contient du fluide magnéto-rhéologique et qui est traversée par l'axe 102. Des joints 113 assurent un coulissement étanche de l'arbre dans la chambre.

L'interface comporte également un capteur de position (non représenté) permettant de mesurer la position longitudinale courante de l'axe 102.

Le frein est destiné à exercer un effort résistant s'opposant au déplacement de l'élément d'interaction avec l'utilisateur. Cet effort résistant est déterminé à partir de motifs haptiques prédéfinis en fonction du rendu haptique que l'on souhaite reproduire, ces motifs sont enregistrés dans une base de données.

Un motif est défini par un effort de freinage à appliquer en fonction des données suivantes:
- la position angulaire courante du bouton,
- le sens de rotation courant du bouton,

Un motif haptique est donc un ensemble de valeurs d'effort de freinage à appliquer au bouton, i.e. un ensemble de valeurs définissant le motif, chaque valeur du motif haptique est associée à une position angulaire donnée du bouton et à un sens de rotation du bouton. Chaque valeur d'effort de freinage correspond à une valeur de viscosité apparente qui correspond à une valeur de champ magnétique qui correspond à une intensité de courant alimentant le système générant le champ magnétique, par exemple une bobine.

Il sera compris que la même valeur du motif peut être affectée pour des positions angulaires différentes, ou plusieurs positions linéaires différentes dans le cas d'une interface linéaire.

Une butée virtuelle est définie par un motif haptique de préférence de forte amplitude, i.e. pour lequel un effort de freinage très élevé est appliqué à l'élément d'interaction avec le fluide afin d'arrêter le déplacement du bouton dans un sens donné. La butée virtuelle est définie par une zone angulaire dans laquelle doit s'appliquer le motif haptique et par un sens de rotation donné du bouton.

Dans le cas présent, nous nous intéressons particulièrement aux cas où le capteur de position détecte que le bouton entre dans une zone définie comme butée haptique et où l'utilisateur continue à appliquer un effort à l'encontre de la butée.

L'unité de commande UC utilise les informations du capteur de position angulaire pour déterminer le couple résistant que doit générer le frein.

Les paramètres utilisés sont les suivants :
Le paramètre ZONE_DE_BUTEE_VIRTUELLE définit une zone angulaire comme une zone angulaire formant une butée haptique.

Le paramètre DIRECTION_BUTEE définit que la zone angulaire définie comme ZONE_DE_BUTEE_VIRTUELLE est effectivement une butée lorsque le bouton est déplacé dans un sens donné qui est DIRECTION_BUTEE. Lorsque le bouton est déplacé dans le sens opposé, le bouton s'éloigne de la butée.

Les variables utilisées sont les suivantes :
La variable DIRECTION_BOUTON est le sens de rotation du bouton.

La variable POSITION_COURANTE_DU_BOUTON est une valeur de position du bouton élaborée par l'unité de commande à partir des informations du capteur de position. L'élaboration de la valeur de la variable POSITION_COURANTE_DU_BOUTON est faite à partir des variations de la position du bouton, qu'elles soient positives ou négatives.

L'indicateur MEMOIRE_POSITION_COURANTE_DU_BOUTON est soit vide, soit contient la variable POSITION_COURANTE_DU_BOUTON qui est égale à une valeur de position située dans la zone ZONE_DE_BUTEE_VIRTUELLE.

De manière préférentielle, le paramètre ZONE_DE_BUTEE_VIRTUELLE peut être défini comme étant l'ensemble des valeurs de freinage d'un motif haptique supérieures à un seuil prédéterminé et qui assurent la simulation d'une sensation de butée. De manière similaire, le paramètre DIRECTION_BUTEE peut être associé à la direction affectée à l'ensemble des valeurs de freinage d'un motif haptique supérieures à un seuil prédéterminé et qui forme le paramètre ZONE_DE_BUTEE_VIRTUELLE.

L'unité de commande est destinée à émettre des ordres aux moyens de génération du champ magnétique sur la base des informations fournis par le capteur de position du bouton et d'algorithmes qui sont mis en œuvre par des moyens électroniques de l'unité de commande. Les algorithmes sont les suivants.

Le premier algorithme AL1 appliqué est le suivant :
Lors d'une étape, on affecte à la variable POSITION_COURANTE_DU_BOUTON une valeur élaborée à partir des informations fournies par le capteur de position angulaire.

Lors d'une autre étape, on affecte à la variable DIRECTION_BOUTON une valeur représentant le sens dans lequel le bouton est tourné. Par exemple, cette valeur est établie à partir de la dérivée temporelle des informations fournies par le capteur de position angulaire.

Lors d'une étape suivante, on vérifie si la valeur de la variable POSITION_COURANTE_DU_BOUTON se trouve dans une zone angulaire qui est définie comme butée : ZONE_DE_BUTEE_VIRTUELLE. On vérifie également si la variable DIRECTION_BOUTON est égale à la condition DIRECTION_BUTEE. Comme expliqué ci-dessus, ces deux conditions doivent être remplies pour que l'unité de commande décide que le bouton est dans une zone de butée.

Si ces deux conditions sont remplies, une butée doit être simulée. L'unité de commande décide que le bouton est en butée. Alors, lors d'une étape suivante, si l'indicateur MEMOIRE_POSITION_ COURANTE_DU_BOUTON est vide, on affecte à cet indicateur, la valeur de la variable POSITION_COURANTE_DU_BOUTON, i.e. MEMOIRE_POSITION_COURANTE_DU_BOUTON = POSITION_COURANTE_DU_BOUTON. C'est la fin du premier algorithme.

Si l'une au moins des deux conditions ci-dessus n'est pas remplie, une butée ne doit pas être simulée. L'unité de commande décide que le bouton n'est pas en butée. Si l'indicateur MEMOIRE_POSITION_COURANTE_DU_BOUTON est vide, il reste vide. Sinon il supprime la valeur qui lui était affecté.

Ensuite un deuxième algorithme AL2 est appliqué.

Lors d'une première étape, on vérifie si l'indicateur MEMOIRE_POSITION_COURANTE_DU_BOUTON contient une valeur.

Si c'est le cas, alors la variable POSITION_COURANTE_DU_BOUTON prend la valeur de l'indicateur MEMOIRE_POSITION_COURANTE_DU_BOUTON, i.e. POSITION_COURANTE_DU_BOUTON = MEMOIRE_POSITION_COURANTE_DU_BOUTON. Ainsi l'unité de commande va considérer, pour générer l'ordre à envoyer aux moyens générant le champ magnétique, une valeur de position courante qui est enregistrée comme butée et qui doit déclencher l'application d'une résistance élevée sur le bouton et donc la génération d'un champ magnétique tel que la viscosité apparente du fluide magnéto-rhéologique applique à l'élément d'interaction avec le fluide un couple résistant suffisant pour simuler une butée. Ceci sera expliqué en lien avec le troisième algorithme. La valeur de position courante, qui est enregistrée comme butée, peut par exemple correspondre à la position d'entrée de la zone définie comme butée haptique.

C'est la fin du deuxième algorithme.

Si l'indicateur MEMOIRE_POSITION_COURANTE_DU_BOUTON ne contient pas de valeur. C'est la fin du deuxième algorithme. Cela signifie qu'aucune butée n'est à simuler.

Ensuite on applique un troisième algorithme AL3 qui va déterminer l'effort de freinage à appliquer.

Lors d'une première étape, on prend en compte le sens de déplacement du bouton.

Si la variable DIRECTION_BOUTON correspond à un sens de déplacement strictement positif. Alors l'unité de commande génère un ordre d'appliquer l'effort de freinage tel que défini pour le sens positif et pour la position déterminée par POSITION_COURANTE_DU_BOUTON.

Sinon si la variable DIRECTION_BOUTON correspond à un sens de déplacement strictement négatif. Alors l'unité de commande génère un ordre d'appliquer l'effort de freinage tel que défini pour le sens négatif et pour la position déterminée par POSITION_COURANTE_DU_BOUTON.

Dans le cas où le bouton est dans une zone de butée et est déplacé dans une sens défini comme celui de la butée, puisque la valeur de la variable POSITION_COURANTE_DU_BOUTON a été altérée par l'algorithme AL2 et est fixée artificiellement égale à l'indicateur MEMOIRE_POSITION_DU_BOUTON qui est égale à une valeur de position définie comme une butée , et ceci même si le bouton est sorti physiquement de la zone de butée du fait de l'insistance de l'utilisateur ou de l'inertie, l'unité de commande va générer un ordre d'appliquer un effort correspondant à une butée et donc de générer un champ magnétique provoquant une augmentation de la viscosité du fluide magnéto-rhéologique suffisante.

Sinon, i.e. si la variable DIRECTION_BOUTON est nulle, c'est-à-dire que le bouton n'est pas déplacé, l'ordre de ne pas appliquer d'effort est généré.

Si, alors qu'une butée était simulée, on détecte un changement de sens de déplacement du bouton, i.e. on détecte lorsque la variable DIRECTION_BOUTON est différente de celle définie comme butée, alors l'une des deux conditions énoncées ci-dessus n'est plus remplie. On élabore une variable POSITION_COURANTE_DU_BOUTON qui ne correspond pas à une zone de butée. L'unité de commande va considérer, cette valeur de POSITION_COURANTE_DU_BOUTON pour générer l'ordre à envoyer aux moyens générant le champ magnétique, une valeur de position courante qui doit déclencher l'application d'une résistance donnée ou aucune résistance.

La modification des informations sur la position angulaire du bouton est réalisée de manière préférentielle en respectant le séquencement périodique des algorithmes AL1, AL2, AL3.

Il sera compris que selon l'invention, il est prévu d'altérer la valeur de la variable POSITION_COURANTE_DU_BOUTON cependant les informations réelles fournies par le capteur de position notamment lorsqu'elles permettent de connaître le sens de rotation du bouton continuent à être prises en compte par l'unité de commande.

Il sera compris qu'une valeur de la variable POSITION_COURANTE_DU_BOUTON n'est pas affectée à une position réelle donnée du bouton, mais qu'elle est élaborée sur la base de la mesure du déplacement relatif du bouton. Par exemple, une zone angulaire réelle qui correspond à une butée à un instant donné peut ne plus correspondre à une zone de butée à un autre instant car l'emplacement de la zone de butée virtuelle est redéterminée en fonction de la position angulaire où le bouton est sorti de la butée, puisqu'il sort de la zone de butée dès que le sens de déplacement est inversé et ceci même s'il se trouvait au milieu de la zone de butée, l'utilisateur ayant par exemple forcé sur le bouton.

Il sera également compris que c'est la valeur de la variable POSITION_COURANTE_DU_BOUTON qui est fournie en retour à une application externe utilisatrice du bouton rotatif et non pas la valeur réelle donnée par le capteur de position. Ainsi, l'application utilisatrice a l'impression que le bouton rotatif reste bloqué sur la butée, ce qui est cohérent avec la sensation d'effort dû à la butée ressenti par l'utilisateur.

Dans l'exemple décrit de manière préférée, l'altération de la position du bouton est réalisée de manière informatique, en affectant une valeur fixe à la variable POSITION_COURANTE_DU_BOUTON. Mais il peut être prévu d'altérer de manière mécanique le fonctionnement du capteur de position pour aboutir à un résultat similaire.

La détermination du sens de rotation a été faite en dérivant les informations du capteur de position, mais le sens de rotation pourrait être déterminé de manière différente, par exemple en utilisant une information sur le sens du couple exercé par l'utilisateur sur le bouton, comme cela sera décrit si dessous dans la détermination de *« l'intention d'action »* de l'utilisateur.

Dans l'exemple décrit, l'unité de commande prend en compte le sens dans lequel le bouton est effectivement tourné en détectant ce déplacement. Mais on peut prendre en compte l'intention d'action de l'utilisateur de tourner le bouton. On détecte alors avantageusement l'information sur le sens de rotation de manière précoce ce qui permet d'améliorer le rendu haptique. Cette détermination de l'intention d'action de l'utilisateur peut être faite en mesurant la force exercée sur le bouton grâce à la déformation d'un élément de l'interface, il s'agit de la mesure d'un couple dans le cas d'un bouton rotatif.

La détermination de l'intention d'action de l'utilisateur permet également de réduire l'effet collage lorsque le bouton s'écarte d'une zone définie comme une butée.

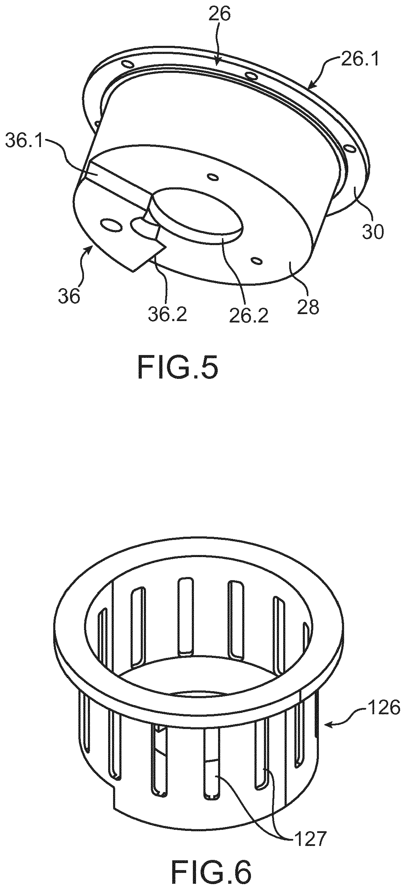

Dans l'exemple représenté sur la figure 1 et sur les figures 4 et 5 un tel système est mis en œuvre, il comporte un corps d'épreuve 26 dont on va détecter la déformation provoquée par le couple appliqué par l'utilisateur avec des capteurs d'effort. Le corps d'épreuve est représenté seul sur la figure 5. Le corps d'épreuve 26 est fixé par une extrémité longitudinale 26.1 au bâti 16 et par l'autre extrémité longitudinale 26.2 au frein magnéto-rhéologique, au boîtier 8 dans l'exemple représenté. Les capteurs d'effort sont en contact avec le corps d'épreuve au niveau de son extrémité longitudinale 26.2 solidarisée au boîtier 8.

Dans l'exemple représenté sur les figures 1, 4 et 5, le corps d'épreuve 26 comporte un corps de forme cylindrique à section circulaire fermé par un fond 28 à l'extrémité longitudinale 26.2. Une collerette annulaire 30 s'étend radialement vers l'extérieur au niveau de l'autre extrémité longitudinale 26.1.

Le diamètre intérieur du corps d'épreuve correspond au diamètre extérieur du boîtier 8, augmenté d'un jeu de fonctionnement. Le fond du corps d'épreuve est disposé entre le boîtier et le deuxième flasque 20 du bâti 16.

Le corps d'épreuve est solidarisé au bâti au moyen d'au moins une vis 32 traversant le flasque 18 et la collerette 30. Dans l'exemple représenté, les vis 32 servent également à lier le flasque 18 à la paroi latérale 28.

Le fond 28 du corps d'épreuve est fixé au boîtier 8 par au moins une vis 34.

Le corps d'épreuve 26 comporte également un élément 36 en saillie de son extrémité longitudinale 26.2 opposée à celle en contact avec le boîtier. L'élément 36 est reçu dans une cavité 38 ménagée dans le flasque 20 du bâti.

Dans l'exemple représenté, l'élément en saillie 36 a la forme d'une portion angulaire centrée sur l'axe longitudinal. La portion angulaire 36 est délimitée par deux faces 36.1, 36.2. La cavité 38 présente une forme correspondant à celle de la portion angulaire 36 et est délimitée par deux faces 38.1 38.2 chacune en regard d'une face 36.1, 36.2 de la portion angulaire 36. Un capteur d'effort 40.1 est monté sur la face 38.1 de la cavité en contact avec la face 36.1 de la portion angulaire et un capteur d'effort 40.2 est monté sur la face 38.2 de la cavité en contact avec la face 36.2 de la portion angulaire 36. Un contact mécanique de type ponctuel est assuré entre chaque capteur d'effort 40.1, 40.2 et le corps d'épreuve 26. Les capteurs d'effort 40.1, 40.2 sont avantageusement montés précontraints.

Ainsi, lorsqu'un couple est appliqué au bouton, celui-ci provoque une déformation par torsion du corps d'épreuve 26 par l'intermédiaire du boitier 8 lui-même en interaction avec le fluide, lui-même en interaction avec l'élément d'interaction 12, lui-même lié à l'arbre 2 Cette déformation est détectée par l'un ou l'autre des capteurs d'effort 40.1, 40.2 suivant le sens de rotation du bouton.

Le corps d'épreuve est par exemple en matériau plastique, tel que l'ABS.

Le matériau du corps d'épreuve et sa géométrie peuvent être déterminés en fonction du couple minimal et du couple maximal appliqués, de la sensibilité des capteurs d'effort et du seuil de détection souhaité. En outre, la déformation du corps d'épreuve est telle qu'elle n'est pas perceptible par l'utilisateur. Par exemple, on put considérer qu'une déformation du corps d'épreuve de quelques microns n'est pas perceptible par l'utilisateur.

Alternativement, on pourrait mesurer les efforts directement sur le boîtier 8 ou sur l'arbre rotatif, pour cela un capteur de couple serait mis en œuvre. Cependant un capteur de couple a un coût élevé et un encombrement important par rapport aux capteurs de force. Par ailleurs, un capteur de couple fournit une valeur du couple précise et calibrée alors que cette information n'est pas utile dans le cadre de l'invention.

Le capteur d'effort est par exemple réalisé à l'aide d'éléments piézorésistifs assemblés sous la forme d'un pont de Wheatstone, ils permettent une sensibilité de l'ordre de quelques dizaines de mV par Newton avec une raideur suffisamment élevée pour limiter le déplacement à quelques dizaines de microns à pleine charge. En variante, le ou les capteurs d'effort pourraient être remplacés par un ou des capteurs de déformation formés, par exemple, par des jauges de contrainte directement appliquées sur le corps d'épreuve pour détecter sa déformation.

Sur la figure 6, on peut voir un autre exemple d'un corps d'épreuve 126 dont la forme générale est identique à celle du corps d'épreuve 26, mais comporte en plus des lumières longitudinales 127 dans la paroi latérale du corps d'épreuve 126. De préférence, les lumières 127 sont réparties angulairement de manière régulière. Le corps d'épreuve présente dans cette réalisation une plus grande aptitude à la déformation. Il est par exemple réalisé en alliage d'aluminium.

Des lumières inclinées par rapport à l'axe longitudinal et/ou ayant une forme autre que rectiligne par exemple une forme courbée ne sortent pas du cadre de la présente invention. Par ailleurs les lumières n'ont pas nécessairement toutes les mêmes dimensions.

De manière avantageuse, on peut prévoir des moyens pour amplifier la déformation du corps d'épreuve sous une contrainte de torsion axiale tout en réduisant la déformation du corps d'épreuve pour toute autre contrainte non pertinente dans le cadre de l'invention, comme par exemple une contrainte radiale qui serait appliquée au bouton de manière parasite par l'utilisateur. La sensibilité de la détection est ainsi améliorée et les perturbations ou fausses détections peuvent être éliminées.

L'exemple de corps d'épreuve des figures 1, 4 à 6 permet d'augmenter la sensibilité du dispositif de mesure en disposant les capteurs sur un diamètre le plus grand possible.

Dans l'exemple représenté et de manière avantageuse, les parois 36.1 et 36.2 de l'élément en saillie sont disposées à 90° l'une par rapport à l'autre. Ce positionnement associé à un contact ponctuel au niveau des capteurs d'effort 40.1 et 40.2 permet de décomposer la contrainte de déformation du corps d'épreuve et de privilégier la sensibilité aux efforts selon deux composantes orthogonales situées dans le plan du bâti 16. Ainsi par exemple, la sensibilité est fortement réduite pour des efforts parasites exercés perpendiculairement au plan du bâti 16. De plus, un traitement calculatoire ou algorithmique sur les composantes des forces orthogonales mesurées par les capteurs 40.1 et 40.2, comme par exemple un calcul basé sur la différence de mesure entre les deux capteurs pondéré par la composante commune de mesure des deux capteurs dans le cas d'un assemblage préférentiel des capteurs avec une précontrainte de charge, permet de réduire dans une certaine mesure la sensibilité aux efforts parasites exercés parallèlement au plan du bâti 16.

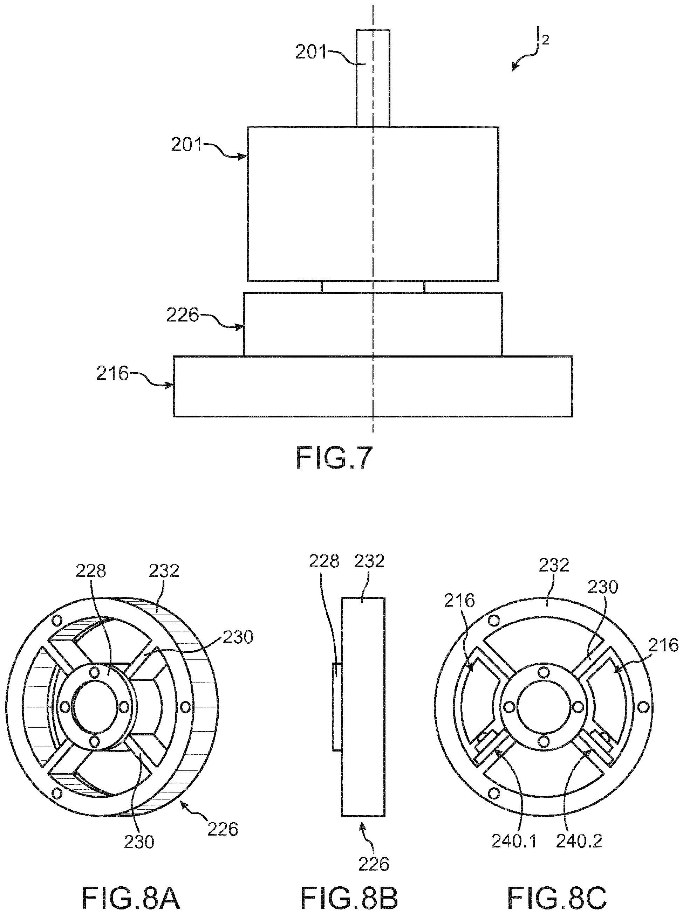

Sur les figures 7 et 8A à 8C, on peut voir un autre exemple de réalisation d'une interface I2 selon l'invention comportant un bâti 216, un frein 204, un corps d'épreuve 226 ayant la forme d'une roue et un élément d'interaction avec l'utilisateur 201, l'élément d'interaction avec le fluide n'étant pas visible.

La roue comporte un moyeu 228, un anneau extérieur 232 et des rayons 230 reliant le moyeu 228 à l'anneau extérieur 232.

Dans cet exemple, le moyeu 228 est solidarisé au boîtier de l'interface par exemple par des vis traversant axialement le moyeu 228 et l'anneau extérieur 232 est solidarisé au bâti par exemple par des vis traversant axialement l'anneau extérieur.

Deux capteurs d'effort 240.1, 240.2 sont disposés en appui chacun contre un rayon 230 et disposés par rapport aux rayons de sorte que, lorsque le corps d'épreuve 226 est sollicité dans un sens de rotation, un seul des capteurs est sollicité. Les capteurs d'efforts sont fixés sur le bâti 216 et en appui contre une face d'un rayon 230. En variante, les capteurs d'effort pourraient être assemblés avec une précontrainte de charge, ou, comme cela a été mentionné ci-dessus, être remplacés par des jauges d'élongation disposées sur le corps d'épreuve et détectant la déformation par exemple des rayons sous l'effet du couple de torsion. Plus généralement les capteurs d'effort peuvent être remplacés par des capteurs de déformation.

Des moyens permettant d'appliquer des contraintes mécaniques au corps d'épreuve, comme de moyens de guidage en rotation ou en translation, peuvent avantageusement être ajoutés, ce qui permet de réduire le nombre de capteurs de force en assemblant ce dernier avec une précontrainte de charge.

Les données issues de ces capteurs de force ou de déformation sont traitées par un système électronique afin de déterminer si le couple exercé par l'utilisateur sur l'interface dépasse un seuil prédéterminé. Le signe de couple est également déterminé et permet de connaître le sens dans lequel l'utilisateur a l'intention de déplacer le bouton.

Les algorithmes AL1, AL2 et AL3 utilisent la connaissance du sens dans lequel l'utilisateur a l'intention de déplacer le bouton à la place de la variable DIRECTION_BOUTON.

Le fonctionnement de l'interface est similaire à celui de l'interface en considérant le sens de rotation du bouton décrit ci-dessus.

De manière avantageuse, l'interface utilise les informations sur le sens de rotation et sur l'intention d'action de l'utilisateur pour générer une butée haptique.

Il sera compris que des moyens de détection de l'intention d'action de l'utilisateur appliqué à un dispositif à déplacement en translation linéaire, par exemple tel que celui représenté sur la figure 3, ne sort pas du cadre de la présente invention.

L'invention permet donc le maintien d'un couple de freinage défini pour la réalisation d'une butée virtuelle même si l'utilisateur sort de manière volontaire ou non de la zone définie comme butée virtuelle. De préférence, le traitement de la position du bouton est intégré au bouton, de sorte à ne pas mettre en œuvre d'application logicielle ou matérielle externe utilisatrice de l'interface haptique rotative (logiciel de réalité virtuelle, jeux, IHM graphique, ...), ce qui permet de réduire les temps de traitement et d'améliorer la qualité haptique ressentie.

## Revendications

1. Procédé de génération de sensations haptiques à partir d'une interface haptique comportant:
- un élément d'interaction (1) avec un utilisateur apte à se déplacer dans un premier sens et dans un deuxième sens,
- un élément d'interaction (12) avec un fluide dont la viscosité varie en fonction d'un stimulus extérieur, l'élément d'interaction (12) avec le fluide étant solidaire au moins en translation ou au moins en rotation de l'élément d'interaction (1) avec l'utilisateur,
- un frein comportant le fluide avec lequel l'élément d'interaction interagit et un système de génération (6) dudit stimulus sur commande dans ledit fluide, l'élément d'interaction (12) avec le fluide étant disposé dans le fluide,
- des moyens de détermination d'une position (14) de l'élément d'interaction (1) avec l'utilisateur,
- des moyens de détermination du déplacement de l'élément d'interaction avec l'utilisateur ou des moyens de détermination du sens dans lequel l'utilisateur a l'intention de déplacer l'élément d'interaction avec l'utilisateur en déterminant le sens de la force exercée par l'utilisateur sur l'élément d'interaction avec l'utilisateur mobile en translation ou le sens du couple exercé par l'utilisateur sur l'élément d'interaction avec l'utilisateur mobile en rotation,
- une unité de commande apte à envoyer des ordres audit système de génération dudit stimulus,
ledit procédé comportant les étapes:
a) de mesure de la position de l'élément d'interaction (1) avec l'utilisateur,
b) de détermination du sens de rotation de l'élément d'interaction (1) avec l'utilisateur ou de détermination du sens dans lequel l'utilisateur a l'intention de déplacer l'élément d'interaction (1) avec l'utilisateur en déterminant le sens de la force ou du couple exercé(e),
c) d'évaluation d'une information de position courante à partir de la mesure de position de l'élément d'interaction (1) avec l'utilisateur,
d) si l'information de position courante est dans une zone définie comme butée haptique et le sens de rotation de l'élément d'interaction (1) avec l'utilisateur ou le sens dans lequel l'utilisateur a l'intention de déplacer l'élément d'interaction (1) avec l'utilisateur est celui associé à la butée haptique, la position courante considérée pour commander le système de génération (6) du stimulus est fixée à une valeur de position courante correspondant à une zone définie comme butée haptique tant que le sens de déplacement de l'élément d'interaction avec l'utilisateur ou le sens dans lequel l'utilisateur a l'intention de déplacer l'élément d'interaction (1) avec l'utilisateur n'est pas modifié,
e) si l'information de position courante est dans une zone autre qu'une zone définie comme butée haptique, la position courante considérée pour commander le système de génération (6) dudit stimulus est évaluée à partir de la mesure de position de l'élément d'interaction (1) avec l'utilisateur,
f) de génération d'un ordre au système de génération (6) dudit stimulus sur la base de la position courante,
g) de modification de la viscosité du fluide.

2. Procédé de génération de sensations haptiques selon la revendication 1, dans lequel si l'information de position courante est dans une zone définie comme butée haptique et le sens de rotation de l'élément d'interaction (1) avec l'utilisateur ou le sens dans lequel l'utilisateur a l'intention de déplacer l'élément d'interaction (1) avec l'utilisateur est celui associé à la butée haptique, la position courante considérée est fixée à une valeur de position courante correspondant à une position de l'élément d'interaction avec l'utilisateur lorsqu'il entre dans une zone définie comme une zone de butée haptique.

3. Procédé de génération de sensations haptiques selon la revendication 1 ou 2, dans lequel la valeur de position courante fixée correspond à une position d'entrée de la zone définie comme butée haptique.

4. Procédé de génération de sensations haptiques selon la revendication 1, 2 ou 3, dans lequel la détermination du sens de rotation comporte le calcul de la dérivée de la mesure de l'étape a).

5. Procédé de génération de sensations haptiques selon l'une des revendications 1 à 4, dans lequel, lorsque le fluide mis en œuvre est un fluide magnétorhéologique l'étape f) comporte l'application d'un champ magnétique.

6. Interface haptique comportant :
- un élément d'interaction (1) avec un utilisateur apte à se déplacer dans un premier sens et dans un deuxième sens,
- un élément d'interaction (12) avec un fluide dont la viscosité varie en fonction d'un stimulus extérieur, l'élément d'interaction (12) avec le fluide étant solidaire au moins en translation ou au moins en rotation de l'élément d'interaction (1) avec l'utilisateur,
- un frein comportant le fluide avec lequel l'élément d'interaction avec un fluide interagit, et un système de génération (6) dudit stimulus sur commande dans ledit fluide, l'élément d'interaction (12) avec le fluide étant disposé dans le fluide,
- des moyens de détermination d'une position (14) de l'élément d'interaction (1) avec l'utilisateur,
- des moyens de détermination du sens de déplacement de l'élément d'interaction avec l'utilisateur et/ou des moyens de détermination du sens de déplacement dans lequel l'utilisateur a l'intention de déplacer l'élément d'interaction avec l'utilisateur en déterminant le sens de la force exercée par l'utilisateur sur l'élément d'interaction avec l'utilisateur mobile en translation ou du couple exercé par l'utilisateur sur l'élément d'interaction avec l'utilisateur mobile en rotation.
- une unité de commande apte à envoyer des ordres audit système de génération dudit stimulus, l'unité de commande comportant des moyens pour générer lesdits ordres en fonction de la position de l'élément d'interaction avec l'utilisateur et du sens de déplacement de l'élément d'interaction avec l'utilisateur et/ou du sens dans lequel l'utilisateur a l'intention de déplacer l'élément d'interaction avec l'utilisateur à partir de motifs haptiques prédéfinis, les motifs haptiques comportant au moins une butée haptique définie pour une zone de déplacement donnée et pour un sens de déplacement donné, l'unité de commande étant configurée pour évaluer une information de position courante à partir de la mesure de position de l'élément d'interaction et telle que :
- si l'information de position courante se situe dans une zone définie comme une butée haptique et que le sens de déplacement de l'élément d'interaction avec l'utilisateur est celui associé à la butée haptique, l'unité de commande est configurée pour fixer la position courante à une valeur de position courante correspondant à une zone définie comme butée haptique, désignée position courante modifiée, tant que le sens de déplacement de l'élément d'interaction avec l'utilisateur n'est pas modifié ou le sens de déplacement dans lequel l'utilisateur a l'intention de déplacer l'élément d'interaction avec l'utilisateur n'est pas modifié,
- si l'information de position courante est dans une zone autre qu'une zone définie comme butée haptique, l'unité de commande est configurée pour évaluer la position courante à partir de la mesure de position de l'élément d'interaction (1) avec l'utilisateur,
ladite unité de commande étant configurée pour générer un ordre au système de génération dudit stimulus sur la base de la position courante, provoquant une modification de la viscosité du fluide.

7. Interface haptique selon la revendication 6, dans laquelle la position courante modifiée est fixée par l'unité de commande à une valeur de position courante correspondant à une position de l'élément d'interaction avec l'utilisateur lorsqu'il entre dans une zone définie comme une zone de butée haptique.

8. Interface haptique selon la revendication 6 ou 7, dans laquelle les moyens de détermination du déplacement de l'élément d'interaction avec l'utilisateur comportent des moyens pour calculer la dérivée des mesures fournies par les moyens de détermination d'une position (14) de l'élément d'interaction (1) avec l'utilisateur.

9. Interface haptique selon l'une des revendications 6 à 8, dans laquelle le fluide est un fluide magnétorhéologique, le stimulus étant un champ magnétique et dans laquelle les ordres générés sont des intensités de courant.

10. Interface haptique selon l'une des revendications 6 à 9, dans laquelle l'élément d'interaction (1) avec l'utilisateur est mobile en rotation et est solidaire d'un arbre de rotation (2) d'axe longitudinal (X) duquel est solidaire en rotation l'élément d'interaction (12) avec le fluide, les moyens de mesure de la position étant un capteur de position angulaire.

11. Interface haptique selon l'une des revendications 6 à 10, dans laquelle l'élément d'interaction (1) avec l'utilisateur est mobile en translation.

## Patentansprüche

1. Verfahren zum Erzeugen haptischer Empfindungen ausgehend von einer haptischen Schnittstelle, enthaltend:
- ein Element (1) zur Interaktion mit einem Benutzer, das dazu geeignet ist, sich in einer ersten Richtung und in einer zweiten Richtung zu verlagern,
- ein Element (12) zur Interaktion mit einem Fluid, dessen Viskosität in Abhängigkeit von einem äußeren Reiz variiert, wobei das Element (12) zur Interaktion mit dem Fluid zumindest verschiebefest oder zumindest drehfest mit dem Element (1) zur Interaktion mit dem Benutzer verbunden ist,
- eine Bremse, die das Fluid enthält, mit dem das Interaktionselement interagiert, und ein System (6) zum befehlsweisen Erzeugen des Reizes in dem Fluid, wobei das Element (12) zur Interaktion mit dem Fluid in dem Fluid angeordnet ist,
- Mittel zum Bestimmen einer Position (14) des Elements (1) zur Interaktion mit dem Benutzer,
- Mittel zum Bestimmen der Verlagerung des Elements zur Interaktion mit dem Benutzer oder Mittel zum Bestimmen der Richtung, in welcher der Benutzer beabsichtigt, das Element zur Interaktion mit dem Benutzer zu verlagern, durch Bestimmen der Richtung der vom Benutzer auf das verschiebbare Element zur Interaktion mit dem Benutzer ausgeübten Kraft oder der Richtung des vom Benutzer auf das drehbare Element zur Interaktion mit dem Benutzer ausgeübten Drehmoments,
- eine Steuereinheit, die dazu geeignet ist, Befehle an das System zum Erzeugen des Reizes zu senden,
wobei das Verfahren die Schritte umfasst:
a) Messen der Position des Elements (1) zur Interaktion mit dem Benutzer,
b) Bestimmen der Drehrichtung des Elements (1) zur Interaktion mit dem Benutzer oder Bestimmen der Richtung, in welcher der Benutzer beabsichtigt, das Element (1) zur Interaktion mit dem Benutzer zu verlagern, durch Bestimmen der Richtung der ausgeübten Kraft bzw. des ausgeübten Drehmoments,
c) Auswerten einer aktuellen Positionsinformation ausgehend von der Messung der Position des Elements (1) zur Interaktion mit dem Benutzer,
d) dann, wenn die aktuelle Positionsinformation sich in einem als haptischer Anschlag definierten Bereich befindet und die Drehrichtung des Elements (1) zur Interaktion mit dem Benutzer oder die Richtung, in welcher der Benutzer beabsichtigt, das Element (1) zur Interaktion mit dem Benutzer zu verlagern, die dem haptischen Anschlag zugeordnete Richtung ist, Festlegen der aktuellen Position, die zum Steuern des Reizerzeugungssystems (6) berücksichtigt wird, auf einen aktuellen Positionswert, der einem als haptischer Anschlag definierten Bereich entspricht, solange die Richtung der Verlagerung des Elements zur Interaktion mit dem Benutzer oder die Richtung, in welcher der Benutzer beabsichtigt, das Element (1) zur Interaktion mit dem Benutzer zu verlagern, nicht verändert wird,
e) dann, wenn die aktuelle Positionsinformation sich in einem anderen Bereich als einem als haptischer Anschlag definierten Bereich befindet, Auswerten der aktuellen Position, die zum Steuern des Reizerzeugungssystems (6) berücksichtigt wird, ausgehend von der Messung der Position des Elements (1) zur Interaktion mit dem Benutzer,
f) Erzeugen eines Befehls an das Reizerzeugungssystem (6) auf Basis der aktuellen Position,
g) Verändern der Viskosität des Fluides.

2. Verfahren zum Erzeugen haptischer Empfindungen nach Anspruch 1,
wobei
dann, wenn die aktuelle Positionsinformation sich in einem als haptischer Anschlag definierten Bereich befindet und die Drehrichtung des Elements (1) zur Interaktion mit dem Benutzer oder die Richtung, in welcher der Benutzer beabsichtigt, das Element (1) zur Interaktion mit dem Benutzer zu verlagern, die dem haptischen Anschlag zugeordnete Richtung ist, die berücksichtigte aktuelle Position auf einen aktuellen Positionswert festgelegt wird, der einer Position des Elements zur Interaktion mit dem Benutzer entspricht, wenn er in einen als haptischer Anschlag definierten Bereich eindringt.

3. Verfahren zum Erzeugen haptischer Empfindungen nach Anspruch 1 oder 2,
wobei
der festgelegte, aktuelle Positionswert einer Position des Eindringens in den als haptischer Anschlag definierten Bereich entspricht.

4. Verfahren zum Erzeugen haptischer Empfindungen nach Anspruch 1, 2 oder 3,
wobei
das Bestimmen der Drehrichtung das Berechnen der Ableitung von der Messung aus Schritt a) umfasst.

5. Verfahren zum Erzeugen haptischer Empfindungen nach einem der Ansprüche 1 bis 4,
wobei
dann, wenn das eingesetzte Fluid ein magnetorheologisches Fluid ist, der Schritt f) das Anlegen eines Magnetfeldes umfasst.

6. Haptische Schnittstelle, enthaltend:
- ein Element (1) zur Interaktion mit einem Benutzer, das dazu geeignet ist, sich in einer ersten Richtung und in einer zweiten Richtung zu verlagern,
- ein Element (12) zur Interaktion mit einem Fluid, dessen Viskosität in Abhängigkeit von einem äußeren Reiz variiert, wobei das Element (12) zur Interaktion mit dem Fluid zumindest verschiebefest oder zumindest drehfest mit dem Element (1) zur Interaktion mit dem Benutzer verbunden ist,
- eine Bremse, die das Fluid enthält, mit dem das Element zur Interaktion mit dem Fluid interagiert, und ein System (6) zum befehlsweisen Erzeugen des Reizes in dem Fluid, wobei das Element (12) zur Interaktion mit dem Fluid in dem Fluid angeordnet ist,
- Mittel zum Bestimmen einer Position (14) des Elements (1) zur Interaktion mit dem Benutzer,
- Mittel zum Bestimmen der Richtung der Verlagerung des Elements zur Interaktion mit dem Benutzer und/oder Mittel zum Bestimmen der Verlagerungsrichtung, in welcher der Benutzer beabsichtigt, das Element zur Interaktion mit dem Benutzer zu verlagern, durch Bestimmen der Richtung der vom Benutzer auf das verschiebbare Element zur Interaktion mit dem Benutzer ausgeübten Kraft oder des vom Benutzer auf das drehbare Element zur Interaktion mit dem Benutzer ausgeübten Drehmoments,
- eine Steuereinheit, die dazu geeignet ist, Befehle an das System zum Erzeugen des Reizes zu senden, wobei die Steuereinheit Mittel zum Erzeugen der Befehle in Abhängigkeit von der Position des Elements zur Interaktion mit dem Benutzer und von der Verlagerungsrichtung des Elements zur Interaktion mit dem Benutzer und/oder von der Richtung, in welcher der Benutzer beabsichtigt, das Element zur Interaktion mit dem Benutzer zu verlagern, ausgehend von vorbestimmten haptischen Mustern enthält, wobei die haptischen Muster zumindest einen haptischen Anschlag enthalten, der für einen vorgegebenen Verlagerungsbereich und für eine vorgegebene Verlagerungsrichtung definiert ist, wobei die Steuereinheit dazu ausgelegt ist, eine aktuelle Positionsinformation ausgehend von der Messung der Position des Interaktionselements auszuwerten, so dass
- dann, wenn die aktuelle Positionsinformation sich in einem als haptischer Anschlag definierten Bereich befindet und die Verlagerungsrichtung des Elements zur Interaktion mit dem Benutzer die dem haptischen Anschlag zugeordnete Richtung ist, die Steuereinheit dazu ausgelegt ist, die aktuelle Position auf einen aktuellen Positionswert festzulegen, der einem als haptischer Anschlag definierten Bereich entspricht, veränderte aktuelle Position genannt, solange die Richtung der Verlagerung des Elements zur Interaktion mit dem Benutzer nicht verändert wird oder die Verlagerungsrichtung, in welcher der Benutzer beabsichtigt, das Element zur Interaktion mit dem Benutzer zu verlagern, nicht verändert wird,
- dann, wenn die aktuelle Positionsinformation sich in einem anderen Bereich als einem als haptischer Anschlag definierten Bereich befindet, die Steuereinheit dazu ausgelegt ist, die aktuelle Position ausgehend von der Messung der Position des Elements (1) zur Interaktion mit dem Benutzer auszuwerten,
wobei die Steuereinheit dazu ausgelegt ist, einen Befehl an das Reizerzeugungssystem auf Basis der aktuellen Position zu erzeugen, wodurch eine Veränderung der Viskosität des Fluides bewirkt wird.

7. Haptische Schnittstelle nach Anspruch 6,
wobei
die veränderte aktuelle Position von der Steuereinheit auf einen aktuellen Positionswert festgelegt wird, der einer Position des Elements zur Interaktion mit dem Benutzer entspricht, wenn er in einen als haptischer Anschlagbereich definierten Bereich eindringt.

8. Haptische Schnittstelle nach Anspruch 6 oder 7,
wobei
die Mittel zum Bestimmen der Verlagerung des Elements zur Interaktion mit dem Benutzer Mittel zum Berechnen der Ableitung aus den Messungen enthalten, die von den Mittel zum Bestimmen einer Position (14) des Elements (1) zur Interaktion mit dem Benutzer bereitgestellt werden.

9. Haptische Schnittstelle nach einem der Ansprüche 6 bis 8,
wobei
das Fluid ein magnetorheologisches Fluid ist, der Reiz ein Magnetfeld ist und die erzeugten Befehle Stromstärken sind.

10. Haptische Schnittstelle nach einem der Ansprüche 6 bis 9,
wobei
das Element (1) zur Interaktion mit dem Benutzer drehbeweglich und fest mit einer Drehwelle (2) mit Längsachse (X) verbunden ist, mit welcher das Element (12) zur Interaktion mit dem Fluid drehfest verbunden ist, wobei die Mittel zum Messen der Position ein Winkelpositionssensor sind.

11. Haptische Schnittstelle nach einem der Ansprüche 6 bis 10,
wobei
das Element (1) zur Interaktion mit dem Benutzer verschiebbar ist.

## Claims

1. A method for generating haptic sensations from a haptic interface comprising:
- a user interacting element (1) able to be moved in a first direction and in a second direction,
- a fluid interacting element (12), the viscosity of the fluid varying as a function of an exterior stimulus, the fluid interacting element (12) being at least translationally or at least rotationally integral with the user interacting element (1),
- a brake comprising the fluid with which the interacting element interacts and a generation system (6) for generating said stimulus on command in said fluid, the fluid interacting element (12) being disposed in the fluid,
- means (14) for determining a position of the user interacting element (1),
- means for determining the movement of the user interacting element or means for determining the direction in which the user intends to move the user interacting element, by determining the strain exerted by a user on the user interacting element, in the case of a translationally movable user interacting element or by determining the direction in which the user intends to move the user interacting element comprises the step of detecting the torque exerted by a user on the user interacting element which is rotatably movable.
- a control unit able to send commands to said system for generating said stimulus,
said method comprising the steps of:
a) measuring the position of the user interacting element (1),
b) determining the direction of rotation of the user interacting element (1) or determining the direction in which the user intends to move the user interacting element (1), by determining the direction of the applied strain or torque.
c) evaluating a current position piece of information from the position measurement of the user interacting element (1),
d) if the current position piece of information is in a zone defined as a haptic stop and the direction of rotation of the user interacting element (1) or the direction in which the user intends to move the user interacting element (1) is that associated with the haptic stop, the current position considered to control the system (6) for generating the stimulus is set to a current position value corresponding to a zone defined as a haptic stop as long as the direction of movement of the user interacting element or the direction in which the user intends to move the user interacting element (1) is not modified,
e) if the current position piece of information is in a zone other than a zone defined as a haptic stop, the current position considered to control the system (6) for generating said stimulus is evaluated from the position measurement of the user interacting element (1),
f) generating a command to the system (6) for generating said stimulus based on the current position,
g) modifying the viscosity of the fluid.

2. The method for generating haptic sensations according to claim 1, wherein if the current position piece of information is in a zone defined as a haptic stop and the direction of rotation of the user interacting element (1) or the direction in which the user intends to move the user interacting element (1) is that associated with the haptic stop, the current position considered is fiexe at a current position value corresponding to a postion of the user interacting element when it enters in a zone defined as a haptic stop zone.

3. The method for generating haptic sensations according to claim 1 or 2, wherein the current position value set corresponds to a zone entering position defined as a haptic stop.

4. The method for generating haptic sensations according to claim 1, 2 or 3, wherein determining the direction of rotation comprises calculating the derivative of the measurement of step a).

5. The method for generating haptic sensations according to one of claims 1 to 4, wherein, when the fluid implemented is a magnetorheological fluid, step f) comprises applying a magnetic field.

6. A haptic interface comprising:
- a user interacting element (1) able to be moved in a first direction and in a second direction,
- a fluid interacting element (12), the viscosity of the fluid varying as a function of an exterior stimulus, the fluid interacting element (12) being at least translationally or at least rotationally integral with the user interacting element (1),
- a brake comprising the fluid with which the interacting element interacts and a generation system (6) for generating said stimulus on command in said fluid, the fluid interacting element (12) being disposed in the fluid,
- means (14) for determining a position of the user interacting element (1),
- means for determining of the movement of the user interacting element and/or means for determining the direction of movement in which the user intends to move the user interacting element, by determining the strain exerted by a user on the user interacting element, in the case of a translationally movable user interacting element or by determining the direction in which the user intends to move the user interacting element comprises the step of detecting the torque exerted by a user on the user interacting element (1) which is rotatably movable,
- a control unit able to send commands to said system for generating said stimulus, the control unit comprising means for generating said commands as a function of the position of the user interacting element and the direction of movement of the user interacting element and/or of the direction in which the user intends to move the user interacting element from predefined haptic patterns, the haptic patterns comprising at least one haptic stop defined for a given movement zone and for a given direction of movement, the control unit being configures to evaluate a current position piece of information from the position measurement of the interacting element and such that,
- if the current position piece of information is located in a zone defined as a haptic stop and the direction of movement of the user interacting element is that associated with the haptic stop, the control unit is configured to fix the current position to a current position value corresponding to a zone defined as a haptic stop, designed as a modified current position, as long as the direction of movement of the user intends to move the user interacting element is not modified,
- if the current position piece of information is in a zone other than a zone defined as a haptic stop, the control unit is configured to evaluate the current position from the position measurement of the user interacting element (1),
said control unit being configured to generate a command to the system for generating the stimulus based on the current position, provoking a modification of the fluid viscosity.

7. The haptic interface according to claim 6, wherein the modified current position is fixed to a current position value corresponding to a position of the user interacting element value whent it enters in a zone defined as a haptic stop zone.

8. The haptic interface according to claim 6 or 7, wherein the means for determining the movement of the user interacting element comprise means for calculating the derivative of the measurements provided by the means (14) for determining a position of the user interacting element (1).

9. The haptic interface according to one of claims 6 to 8, wherein the fluid is a magnetorheological fluid, the stimulus being a magnetic field and wherein the commands generated are current intensities.

10. The haptic interface according to one of claims 6 to 9, wherein the user interacting element (1) is rotatably movable and is integral with a rotating shaft (2) with a longitudinal axis (X) with which the fluid interacting element (12) is integral, the means for measuring the position being an angular position sensor.

11. The haptic interface according to one of claims 6 to 10, wherein the user interacting element (1) is translationally movable.
